# EUROPEAN PATENT APPLICATION

(11) **EP 4 556 375 A1**
(43) Date of publication of application: **21.05.2025**
(21) Application number: 24209088.4
(22) Date of filing: 27.10.2024
(51) Int. Cl.: B64D 45/02, B64C 3/28

(54) **LIGHTNING ARRESTER FOR A LOW OBSERVABLE VEHICLE AND SAME**

(30) Priority: 17.11.2023 DE 102023132129
(71) Applicant: Airbus Defence and Space GmbH, 82024 Taufkirchen (DE)
(72) Inventor: KARCH, Christian, 82024 Taufkirchen (DE); BLECKMANN, Matthias, 82024 Taufkirchen (DE)
(74) Representative: LKGLOBAL Lorenz & Kopf Patentanwalt Attorney at Law PartG mbB

(57) **Abstract**

A lightning arrester (10) for a low observable vehicle (1), in particular stealth aircraft, is proposed, comprising a support structure (14) composed of a first metal alloy having high thermal stability and comprising a diverting structure (15) composed of a second metal alloy having high electrical conductivity, said diverting structure being accommodated at least sectionally in the support structure (14); and a vehicle (1), in particular stealth aircraft, comprising at least one such lightning arrester (10) is also proposed.

## Description

### Technical field

The present disclosure relates to a lightning arrester for a low observable vehicle, in particular stealth aircraft, and also a vehicle comprising at least one lightning arrester.

### Technical background

The camouflage of vehicles, such as for example military fighter aircraft and equipment, against radar sensing is a more and more frequent requirement, in particular for current and future weapons systems. There are various possibilities for reducing identifiability by radar systems, such as e.g. reducing the radar backscatter cross section (*radar cross section* - RCS), by way of *radar absorbing material* (RAM) and/or radar absorbing structures (*radar absorbing structure -* RAS).

At the same time, lightning protection on vehicles, in particular aircraft, poses a major challenge, primarily for vehicles having structures composed of composite materials, such as substantially metal-free composite materials. Lightning protection of such structures is generally realized by metallic, expanded or perforated films. Furthermore, it is also possible to use diverting elements composed of copper or copper alloys which have good electrochemical compatibility with the composite materials and also a high electrical conductivity by comparison with other materials.

EP 3 483 070 B1, for example, relates to a lightning protection device for an aircraft, comprising firstly an anti-corona element having a rounded shape and an electrically conductive surface, said element being intended for enveloping a region of the structure of the aircraft that may receive a lightning arc, and secondly one or more electric charge dissipators attached to the anti-corona element. The lightning protection device may comprise a dielectric shell enclosing the anti-corona element and the charge dissipator(s).

FR 2 924 687 B1 relates to a lightning arrester system for a composite structure having an outer surface that is intended to be subjected to an air flow, wherein the system comprises at least one electrically conductive strip and fasteners from the strip to the structure. According to the invention, the outer aircraft structure has holes provided for accommodating said fasteners, wherein at least some of said fasteners comprise a fastener element for diverting the lightning to said structure. The fastener element is provided for being inserted into the hole, wherein its upper part is substantially level with the outer surface of said structure, the fastener element is in electrical contact with the electrically conductive strip, and at least part of the electrically conductive strip is provided for being arranged in the thickness of the structure by virtue of being connected to the aircraft structure ground.

However, the lightning protection of RAM/RAS structures by known lightning arrester systems is problematic or actually an inherent contradiction because it is subject to a dilemma. In this regard, on the one hand, a large metallic structure is required in order to reliably divert a lightning current load into the grounded metallic cell of the vehicle and thus ensure an efficient lightning protection measure for the cell. Secondly, it is necessary to avoid a situation in which the application of metallic structures on the surface of RAS structures leads to an increase in the radar backscatter cross section of the structure.

Experimental investigations, such as e.g. by M-S. Jang et al., "Influence of lightning strikes on the structural performance of Ni-glass/epoxy radar-absorbing structures", Composite Structures 245 (2020) 112301, have shown that RAM or RAS structures increase lightning-induced thermomechanical damage, which not only leads to severe damage to the RAM or RAS structures themselves, but may also severely damage the composite material supporting structure.

The RCS signature, i.e. the reflection coefficient of the incident EM (electromagnetic) wave, is adversely affected by the lightning-induced damage if the size of the damage is larger than half a free-space wavelength. In the case of multilayered RAS structures, the relevant damage size is dependent on the size of the non-visible delamination between the different layers of the RAS structures.

One possible solution for lightning protection (*lightning strike protection* - LSP) of RAS structures comprises segmented diversion strips, which do not (significantly) impair the RF transparency of radar domes or radomes since they consist of conductive but separate metal buttons, such as e.g. so-called *Strike Tape* from *Weather Guard Lightning Tech.* However, the LSP performance of segmented diversion strips is considerably reduced by surface contaminants or even completely impaired by surface contaminants, water films and ultimately by ice deposits. Moreover, segmented diverting plates have relatively high maintenance costs or need to be replaced after every lightning strike, which may result in unacceptably high maintenance overhead.

### Description

The object can be considered that of providing suitable lightning protection for low observable vehicles, in particular stealth aircraft. In particular, there should be provision of lightning protection for such vehicles which, firstly, reliably protects the vehicle and its possible occupants against lightning and, secondly, does not increase, or at most only insignificantly increases, the radar backscatter cross section of the vehicle.

This object is achieved by the subject matter of independent claim 1 and also of alternative independent claim 8. Further embodiments are evident from the dependent claims and from the following description.

In particular, the object is achieved by a lightning arrester for a low observable vehicle, in particular stealth aircraft, comprising a support structure composed of a first metal alloy having high thermal stability and comprising a diverting structure composed of a second metal alloy having high electrical conductivity, said diverting structure being accommodated at least sectionally in the support structure.

In the case of a vehicle, in particular stealth aircraft, the object is achieved in particular by its comprising at least one corresponding lightning arrester.

In this way, it is possible to provide lightning protection which exhibits at the same time high thermal stability and electrical conductivity and which can leave the radar backscatter cross section of the vehicle substantially unimpaired. The metallic support structure can at least sectionally encase the diverting structure. The diverting structure can be embedded in the support structure. By way of example, the support structure can be provided by an additive manufacturing method, such as 3D printing. The support structure can thus prevent the diverting structure from melting or vaporizing. The lightning protection capability of the lightning arrester is advantageously not impaired by surface contaminations, water films or ice deposits. Furthermore, its radar backscatter signature can be significantly smaller than that of long segmented diverting strips in accordance with the prior art.

In accordance with one embodiment of the lightning arrester, provision can be made for the first metal alloy to be formed from at least one refractory metal in a substantial proportion. The first metal alloy can contain refractory metal to the extent of more than 40% by weight, preferably more than 60% by weight, extremely preferably more than 95% by weight. By way of example, the first metal alloy can contain refractory metal to the extent of more than 98% by weight. The size and diameter of the lightning arrester can advantageously be minimized by the use of refractory metals.

The refractory metals are a class of metals that are extraordinarily resistant to heat and mechanical wear. The most common definition of the refractory metals includes five elements: two from the fifth period in the periodic table of the elements, namely niobium (Nb) and molybdenum (Mo), and three from the sixth period, namely tantalum (Ta), tungsten (W) and rhenium (Re). These elements are chemically inert and have a relatively high density and high mechanical hardness at room temperature. Their melting point is between 2477°C (Nb) and 3186°C (Re). These high melting points determine most applications of the refractory metals. They are generally used in lighting devices, lubricants, control rods for nuclear reactions, as catalysts and on account of their chemical or electrical properties. On account of their extremely high melting point, components made from refractory metals are never produced by casting, but rather by powder metallurgy methods or nowadays by 3D printing (additive manufacturing, AM).

In accordance with one embodiment of the lightning arrester, provision can be made for the first metal alloy to contain tungsten in a predominant proportion by weight. In its raw form, tungsten is a hard, steel gray metal which is often brittle and can be industrially processed further only with difficulty. If it is produced in very pure form, tungsten maintains its hardness and becomes sufficiently malleable for further material processing. It does not react with water, is insensitive to most acids and bases and does not react with oxygen or with air at room temperature, but rather starts to oxidize only at higher temperatures of more than 400°C. Moreover, tungsten has the lowest vapor pressure of all metals. The vapor pressure/gas pressure level is a crucial factor for the suitability of tungsten as part of the support structure of the lightning arrester, since its at least sectional vaporization at high temperatures caused by a lightning strike can thus be avoided.

In accordance with one embodiment of the lightning arrester, provision can be made for the second metal alloy to contain elements from the copper group, in particular copper, in a predominant proportion by weight. By way of example, the first metal alloy can be a copper alloy. In this regard, copper has a high electrical conductivity and is therefore well suited to reliably diverting electrical charge introduced by a lightning strike. Even though the copper itself has a relatively low melting point of approximately 1358°C, the support structure of the lightning arrester nevertheless protects its copper-containing diverting structure.

In addition, it should be taken into account that copper can advantageously combine with tungsten. In this regard, pure tungsten by itself is brittle and has a significantly higher electrical resistance than copper. A copper-tungsten composite (CuW or sometimes also WCu) can constitute a good compromise between electrical conductivity and thermal endurance. In this regard, copper and tungsten are not soluble in one another, but a corresponding composite material is formed from a matrix of particles of the two materials that are dispersed in one another. However, such a composite can be easier to process and have a higher electrical conductivity than pure tungsten.

In accordance with one embodiment of the lightning arrester, provision can be made for at least one support strut of the support structure to at least partly penetrate through the diverting structure. A plurality of support struts can form a support grid or honeycombs. Consequently, the support structure can mechanically stabilize and at the same time thermally protect the diverting structure.

In accordance with one embodiment of the lightning arrester, provision can be made for the lightning arrester to taper from its diverting end for electrically conductively connecting the lightning arrester to an electrically conductive structure of the vehicle toward its receiving end for receiving a flash of lightning.

By way of example, the lightning arrester can be of wedge-shaped design in cross section. Diverting end and receiving end can thus be dimensioned in regard to optimization of their respective function. In particular, the size or diameter of the receiving end should be as small as possible in order not to increase the radar backscatter cross section. The diverting end can have a sufficiently large diameter in order to be able to reliably transfer electrical charge to the structure of the vehicle, without damaging said structure.

In accordance with one embodiment of the lightning arrester, provision can be made for the lightning arrester to be provided at least sectionally with an anticorrosion coating. In particular, the receiving end of the lightning arrester can be surrounded by the anticorrosion coating. It is thus possible to reduce potential corrosion and erosion effects in particular at the receiving end of the lightning arrester. The anticorrosion coating can contain nickel and/or chromium, for example. By way of example, the anticorrosion coating can be designed as a thin film having a typical thickness of approximately 1 to 50 µm.

In accordance with one embodiment of the vehicle, provision can be made for the at least one lightning arrester to at least sectionally penetrate through a radar absorption layer attached to the exterior of the vehicle and to be electrically conductively connected to an electrically conductive structure of the vehicle. The at least one lightning arrester can pierce the radar absorption layer with a receiving end for receiving the lightning. An outer shape of the lightning arrester should in particular terminate flush with an outer surface of the RAS structures and correspond to or complement or continue the contour thereof. Consequently, the lightning arrester can be completely embedded in one of the electrical RAS structures, such as for example in the region of a leading edge of an aircraft.

In accordance with one embodiment of the vehicle, provision can be made for the at least one lightning arrester to be surrounded at least sectionally by a magnetic radar absorber. The radar absorber can be arranged between the radar absorption layer and the lightning arrester. By way of example, the radar absorber can extend in cross section along a longitudinal axis of the lightning arrester and in wedge-shaped fashion along the lightning arrester and/or can widen toward the electrically conductive structure of the vehicle. An optimum or maximum possible thickness of the lightning arrester at that end of the radar absorber which is connected to the electrically conductive structure can be determined for example numerically by calculation of the damping constant of the EM surface. The preferably wedge-shaped thin absorber can thus help here to reduce potential surface waves that might be decoupled and re-radiated at material interfaces and geometric transitions.

### Brief description of the figures

A more specific description of some details is given below with reference to the accompanying drawings. The illustrations are schematic and not true to scale. Identical reference signs refer to identical or similar elements. In the figures:
- figure 1: shows a schematic perspective view of a vehicle, in particular stealth aircraft;
- figure 2: shows a schematic illustration of a cross section of an RAS provided with a lightning arrester in the vehicle shown in figure 1;
- figure 3: shows a schematic cross-sectional view of one exemplary embodiment of a lightning arrester;
- figure 4: shows a schematic cross-sectional view along a longitudinal axis of the exemplary embodiment of the lightning arrester shown in figure 3;
- figure 5: shows a schematic cross-sectional view of a further exemplary embodiment of a lightning arrester; and
- figure 6: shows a schematic cross-sectional view along a longitudinal axis of the exemplary embodiment of the lightning arrester shown in figure 5.

### Detailed description

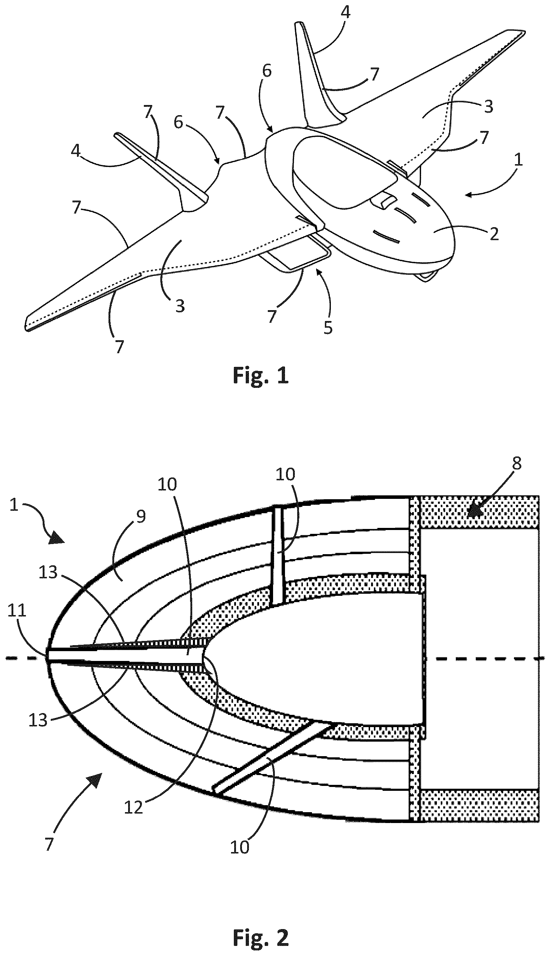

Figure 1 shows a schematic perspective view of a vehicle 1, in particular in the form of a stealth aircraft. The vehicle 1 has a fuselage 2, wings 3, vertical tail units 4 and also air inlets 5 and air outlets 6. Particularly in the region of the wings 3, vertical tail units 4 and also air inlets 5 and air outlets 6, leading and/or trailing edges 7 are formed, at which air flows toward and/or away during operation of the vehicle 1.

Figure 2 shows a schematic illustration of a cross section of one of the leading and/or trailing edges 7, which comprises an electrically conductive structure 8, in particular in the form of a support structure of the vehicle 1, and, surrounding said structure, a radar absorption layer 9 for providing a radar absorbing structure (RAS). A lightning arrester 10 is accommodated in the radar absorption layer 9. A receiving end 11 of the lightning arrester 10 for receiving a flash of lightning (not shown) terminates flush with an outer surface or outer skin of the radar absorption layer 9. A diverting end 12 of the lightning arrester 10 is connected to the structure 8. In particular, the diverting end 12 can be incorporated into the structure 8.

A radar absorber 13, for example composed of magnetic material, can at least sectionally surround the lightning arrester 10. The lightning arrester 10 and/or the radar absorber 13 can taper from the diverting end 12 toward the receiving end 11. By way of example, the lightning arrester 10 and/or the radar absorber 13 can at least sectionally be of wedge-shaped and/or conical design or have a frustoconical contour. The lightning arrester 10 and/or the radar absorber 13 can run substantially at right angles or at an angle to a respective surface normal of an outer contour of the radar absorption layer 9.

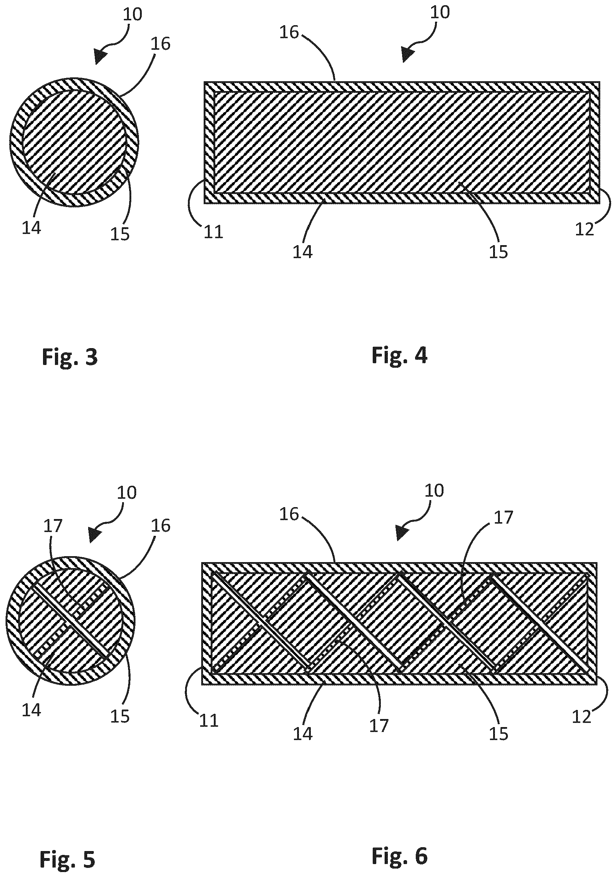

Figures 3 and 4 respectively show a schematic cross-sectional view and a schematic cross-sectional view along a longitudinal axis of one exemplary embodiment of the lightning arrester 10. It becomes clear here that the lightning arrester 10 comprises a support structure 14 and a diverting structure 15, which can be at least sectionally enveloped by the support structure 14. The support structure 14 can be formed from a particularly thermally stable material and for this purpose can contain in particular a refractory metal, preferably tungsten. The diverting structure can be formed from an electrically particularly conductive material, in particular a material from the copper group, for example copper and/or a copper alloy. At least sectionally, an anticorrosion coating 16, for example composed of nickel and/or chromium, can be applied to the exterior of the lightning arrester 10.

Figures 5 and 6 respectively show a schematic cross-sectional view and a schematic cross-sectional view along a longitudinal axis of a further exemplary embodiment of the lightning arrester 10. In contrast to the exemplary embodiment shown in figures 3 and 4, the support structure 14 of the exemplary embodiment of the lightning arrester 10 shown in figures 5 and 6 has support struts 17, which at least sectionally penetrate through the diverting structure 15. By way of example, the support struts 17 can extend perpendicularly and/or transversely with respect to an outer sheath of the support structure 14. The support struts 17 can thus form a support grid or a honeycomb-like structure which extends through an interior formed by the support structure 14 and helps to improve the mechanical stability and hence thermal stability of the lightning arrester 10. In this regard, the diverting structure 15 can be accommodated in support cells embodied in honeycomb-like fashion by the support structure 14. This helps to keep the diverting structure 15 stable even if its temperature is near or even at least sectionally exceeds its melting point in the case of a lightning strike.

A radar backscatter signature of the vehicle 1 should be as small as possible, which should be taken into account in the design of the radar absorption layer 9 and the lightning arrester 10, in particular in respect of how far the receiving end 11 influences the radar backscatter signature. Consequently, the size of the lightning arrester 10, in particular of the receiving end 11 thereof, should preferably be kept small. At the same time, however, the dimensions of the lightning arrester 10 should be chosen so that the lightning arrester satisfies requirements in respect of expected lightning charges or zones in accordance with corresponding specifications or recommendations, as defined e.g. in SAE ARP5412, *Aircraft Lightning Environment and Related Test Waveforms,* 2013; SAE ARP5416, *Aircraft Lightning Test Methods,* 2005.

The dimensions of the lightning arrester 10 can be ascertained by an electrothermal simulation of a lightning strike or of electric currents to be expected as a result. In this way, it is possible to show that a diameter of the receiving end 11, i.e. in particular the tip of the lightning arrester 10, should have a diameter of at least 3 mm if the thermomechanical damage to a lightning arrester composed of copper is intended to be minimized. In this case, an interception efficiency and a size efficiency of the lightning arrester 10 should be taken into account, which as a product together determine a total efficiency of the lightning arrester 10. The interception efficiency can be defined as that efficiency of the lightning arrester 10 with which it intercepts a lightning strike. The size efficiency can be defined as that efficiency of the lightning arrester 10 with which it diverts the electrical charges introduced by the lightning, without being damaged.

In the context of these considerations, it has been found that, in particular, composite materials composed of tungsten and copper enable particularly efficient lightning arresters 10 to be provided. In this regard, the lightning arrester's support structure 14 can be produced for example by powder bed-based laser melting *(selective laser beam melting* - LBM), wherein a tungsten proportion of more than 98% can be attained. Additive manufacturing (AM) methods, too, can be utilized in order to provide tungsten and/or tungsten-copper structures tailored to respective requirements and having an optimized topology and also proportions of tungsten and/or copper. The aim here should always be to choose the dimensions of the lightning arrester 10 so that the latter does not contribute or contributes as little as possible to the radar signature and at the same time can withstand the electrical charges to be expected from the lightning strike.

Advantageously, the support structure 14 can be provided as a substantially hollow cylinder or cylinder-like body, for example manufactured substantially from tungsten, which body is filled with the diverting structure 15, for example substantially composed of copper. Alternative shapes or materials or alloys are conceivable for the support structure 14 and the filling material as diverting structure 15. The support structure 14 can provide an outer enclosure which maintains its shape even at high temperatures owing to a lightning strike. In this way, the lightning arrester 10 can withstand multiple successive lightning strikes. Moreover, it is possible to provide geometries for the lightning arrester 10 which are more complex than those described herein. By way of example, besides conical contours, curved contours of the lightning arrester 10 are conceivable which can adapt to the respective requirements resulting from the design of the vehicle 1. Besides a design composed of a plurality of materials which form a support structure 14 and a diverting structure 15 as described herein, an integral design of the lightning arrester 10 is also conceivable, for example composed of an aforementioned alloy.

It should additionally be pointed out that "comprising" or "having" does not exclude other elements or steps, and "a", "an" or "one" does not exclude a plurality. It is furthermore pointed out that features or steps that have been described with reference to one of the above exemplary embodiments may also be used in combination with other features or steps of other exemplary embodiments described above. Reference signs in the claims should not be interpreted as restricting.

### List of reference signs

- 1: vehicle / aircraft
- 2: fuselage
- 3: wing
- 4: vertical tail unit
- 5: air inlet
- 6: air outlet
- 7: leading edge / trailing edge
- 8: electrically conductive structure / support structure
- 9: radar absorption layer / RAS

- 10: lightning arrester
- 11: receiving end
- 12: diverting end
- 13: radar absorber
- 14: support structure / support body
- 15: diverting structure / diverting body
- 16: anticorrosion coating
- 17: support strut

## Claims

1. A lightning arrester (10) for a low observable vehicle (1), in particular stealth aircraft, comprising a support structure (14) composed of a first metal alloy having high thermal stability and comprising a diverting structure (15) composed of a second metal alloy having high electrical conductivity, said diverting structure being accommodated at least sectionally in the support structure (14).

2. The lightning arrester (10) as claimed in claim 1, wherein the first metal alloy is formed from at least one refractory metal in a substantial proportion.

3. The lightning arrester (10) as claimed in claim 1 or 2, wherein the first metal alloy contains tungsten in a predominant proportion by weight.

4. The lightning arrester (10) as claimed in at least one of claims 1 to 3, wherein the second metal alloy contains elements from the copper group, in particular copper, in a predominant proportion by weight.

5. The lightning arrester (10) as claimed in at least one of claims 1 to 4, wherein at least one support strut (17) of the support structure (14) at least partly penetrates through the diverting structure (15).

6. The lightning arrester (10) as claimed in at least one of claims 1 to 5, wherein the lightning arrester (10) tapers from its diverting end (12) for electrically conductively connecting the lightning arrester (10) to an electrically conductive structure (8) of the vehicle (1) toward its receiving end (11) for receiving a flash of lightning.

7. The lightning arrester (10) as claimed in at least one of claims 1 to 6, wherein the lightning arrester (10) is provided at least sectionally with an anticorrosion coating (16).

8. A vehicle (1), in particular stealth aircraft, **characterized by** at least one lightning arrester (10) as claimed in at least one of claims 1 to 7.

9. The vehicle (1) as claimed in claim 8, wherein the at least one lightning arrester (10) at least sectionally penetrates through a radar absorption layer (9) attached to the exterior of the vehicle (1) and is electrically conductively connected to an electrically conductive structure (8) of the vehicle (1).

10. The vehicle (1) as claimed in claim 8 or 9, wherein the at least one lightning arrester (10) is surrounded at least sectionally by a magnetic radar absorber (13).
